# EUROPÄISCHE PATENTSCHRIFT

(11) **EP 1 469 242 B1**
(45) Veröffentlichungstag und Bekanntmachung des Hinweises auf die Patenterteilung: **22.02.2006**
(21) Anmeldenummer: 04006312.5
(22) Anmeldetag: 17.03.2004
(51) Int. Cl.: F16K 31/60, F16K 35/02

(54) **Handgriffe für Ventile**
Valve handles
Poignées pour soupapes

(30) Priorität: 16.04.2003 DE 10317808
(43) Veröffentlichungstag der Anmeldung: 20.10.2004
(73) Patentinhaber: Georg Fischer Rohrleitungssysteme AG, 8201 Schaffhausen (CH)
(72) Erfinder: Miklo, Jürgen, 8240 Thayngen (CH); Schäpper, Walter, 9470 Buchs (CH)
(74) Vertreter: Weiss, Wolfgang

(56) Entgegenhaltungen:
- EP-A- 0 773 395
- WO-A-01/18439
- DE-A- 4 336 008
- FR-A- 2 756 034
- US-A- 1 958 165
- US-A- 5 213 308

## Beschreibung

Die Erfindung bezieht sich auf einen Handgriff als Betätigungsvorrichtung für Ventile, umfassend einen Befestigungskopf zur Befestigung an einer Spindel des Ventils und einen Betätigungsarm zur drehbaren Betätigung der Spindel, wobei die Spindel in einem Ventilgehäuse drehbar um die Drehachse eines Verschlussteiles angeordnet ist und wobei der Betätigungsarm senkrecht zur Achse der Spindel von einer geschlossenen Stellung in einer geöffneten Stellung des Ventils bewegbar angeordnet ist.

In Rohrleitungssysteme werden Ventile angewendet, die in einer definierten Stellung festgesetzt werden können. Hierbei ist es oft notwendig, die Ventilstellung gegen unberechtigter oder unbeabsichtigter Betätigung zu schützen.

Aus der DE 43 36 008 A1 ist ein gattungsgemässer Handgriff für ein Ventil bekannt. Die Winkelbewegung des Handgriffes wird begrenzt durch Stifte, die an Anschlägen am Ventilgehäuse im geöffneten und im geschlossenen Zustand des Ventils anschlagen. Die Stifte verhindern eine unberechtigte oder unbeabsichtigte Winkelbewegung des Handgriffs. Die Stifte, die im Handgriff angeordnet sind, werden gegen das Ventilgehäuse durch Sicherungs- und Entsicherungshebel, die mit einer Feder verbunden sind, nach unten gedrückt. Der Handgriff ist lose auf die Ventilspindel aufgesteckt. Der Handgriff kann also jederzeit ohne Werkzeug von der Ventilspindel abgezogen werden.

Aus der EP 773 395 A1 ist ein weiterer gattungsgemässer Handgriff bekannt. Der Handgriff besteht im wesentlichen aus einem Befestigungskopf, der auf einer Spindel eines Ventils befestigt werden kann und einem Betätigungsarm, der einstückig mit dem Befestigungskopf verbunden ist. Der Betätigungsarm ist senkrecht zur Achse der Ventilspindel verlaufend angeordnet. Auf der Unterseite des Betätigungsarmes ist eine federnde Klinke ausgebildet. Das federnde Ende der Klinke rastet im ungespannten Zustand in einer genau dazu passenden Klinkenaufnahme ein, die an der Oberseite des Ventilgehäuses ausgespart ist. In dieser Ruhestellung kann die Klinke mit einem Vorhängeschloss gegen unbeabsichtigte Bewegung gesichert werden. Die Klinke kann somit nicht aus der Klinkenaufnahme entfernt werden, der Betätigungsarm kann nicht betätigt werden und die Ventilspindel kann nicht gedreht werden. Der Befestigungskopf ist mittels einer versenkbaren Mutter an einer Schraube am freien Ende der Ventilspindel angeschraubt. Die Mutter und die Schraube befinden sich in einer Vertiefung im Befestigungskopf. Die Verbindung zwischen Ventilspindel und Handgriff kann jederzeit gelöst werden.

Aus der FR 2756034 A ist ein weiterer Handgriff als Betätigungsvorrichtung für einen Kugelhahn bekannt. Der Handgriff umfasst einen Befestigungskopf zur Befestigung an die Spindel des Ventils und einen Betätigungsarm zur drehbaren Betätigung der Spindel. In einer Vertiefung des Betätigungsarmes ist ein elastischer Hebel eingebracht, mit dem die Betätigung des Handgriffes verhindert werden kann. Unterhalb des Hebels ist eine Schraube zur Befestigung des Handgriffes an die Spindel angeordnet. Die Schraube wird abgedeckt durch die Druckfläche des Hebels.

Ausgehend von diesem Stand der Technik ist es Aufgabe der Erfindung, einen Handgriff für Ventile anzugeben, der eine unberechtigte oder unbeabsichtigte Betätigung des Ventils möglichst lange und möglichst wirksam verhindert.

Diese Aufgabe wird gelöst durch einen Handgriff als Betätigungsvorrichtung für Ventile, umfassend einen Befestigungskopf zur Befestigung an einer Spindel des Ventils und einen Betätigungsarm zur drehbaren Betätigung der Spindel, wobei die Spindel in einem Ventilgehäuse drehbar um die Drehachse eines Verschlussteiles angeordnet ist, wobei der Betätigungsarm senkrecht zur Achse der Spindel von einer geschlossenen Stellung in einer geöffneten Stellung des Ventils bewegbar angeordnet ist, wobei der Betätigungsarm ein Mittel zur Verhinderung der Betätigung des Handgriffs aufweist, wobei der Befestigungskopf ein Befestigungsmittel zur Befestigung des Handgriffes an der Ventilspindel aufweist, und wobei der Handgriff eine Verschlussplatte zum Verschliessen des Befestigungsmittels aufweist.

Bevorzugte Weiterbildungen der Erfindung ergeben sich aus den abhängigen Ansprüchen.

Es ist von Vorteil, dass zur Montage und Demontage des Ventils keine weiteren Werkzeuge benötigt werden. Dies wird dadurch erreicht, dass die Verschlussplatte aus einem Kunststoffmaterial mit einer wesentlich höheren Festigkeit als das Kunststoffmaterial des Handgriffes aufweist. Dies wird auch dadurch erreicht, dass die Verschlussplatte ein zweites Paar Vorsprünge aufweist, die passend zur Montage und Demontage eines Einschraubringes zur Befestigung des Verschlussteiles in dem Ventilgehäuse des Kugelhahns ausgebildet sind.

Ein Ausführungsbeispiel der Erfindung wird anhand der Figuren beschrieben. Es zeigen:
Figur 1 eine perspektivische Sicht auf einen erfindungsgemässen Handgriff als Betätigungsvorrichtung für ein Ventil im zusammengebauten Zustand,
Figur 2 eine perspektivische Sicht auf das Ventil von Figur 1 in Explosionsdarstellung,
Figur 3 eine perspektivische Sicht auf ein weiteres Ausführungsbeispiel des Handgriffes für ein Ventil mit einem Multifunktionsmodul und
Figur 4 eine perspektivische Sicht auf das Ventil von Figur 3 in Explosionsdarstellung.

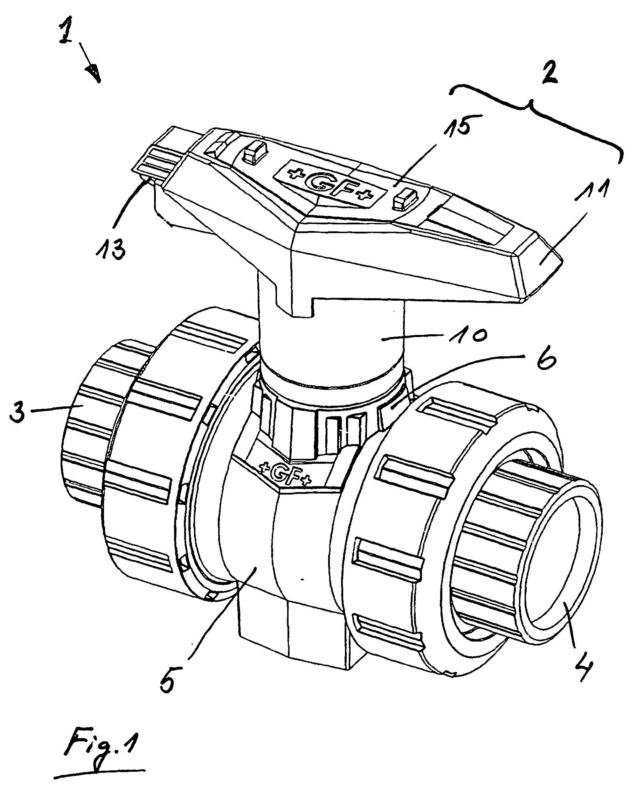

In Figur 1 ist ein Kugelhahn 1 mit einem Handgriff 2 und mit zwei Rohrleitungsanschlüssen 3,4 perspektivisch dargestellt. Oberhalb vom Ventilgehäuse 5 des Kugelhahnes 1 ist parallel zur Rohrleitungsachse ein Kragenbereich 6 ausgebildet. Durch den Kragenbereich 6 führt eine Ventilspindel 7. Die Ventilspindel 7 ist einerseits mit dem Verschlussteil, hier das Kugelküken des Kugelhahnes 1 verbunden und anderseits mit dem Handgriff 2 zur Betätigung des Kugelhahns 1. Der Handgriff 2 umfasst im wesentlichen einen Befestigungskopf 10, einen Betätigungsarm 11 und ein Hebelarm 13 als der von aussen her sichtbare Teil eines Mittels 14 zur Verhinderung der Betätigung des Handgriffs 2. Der Handgriff 2 weist auf der Oberseite eine Verschlussplatte 15 auf.

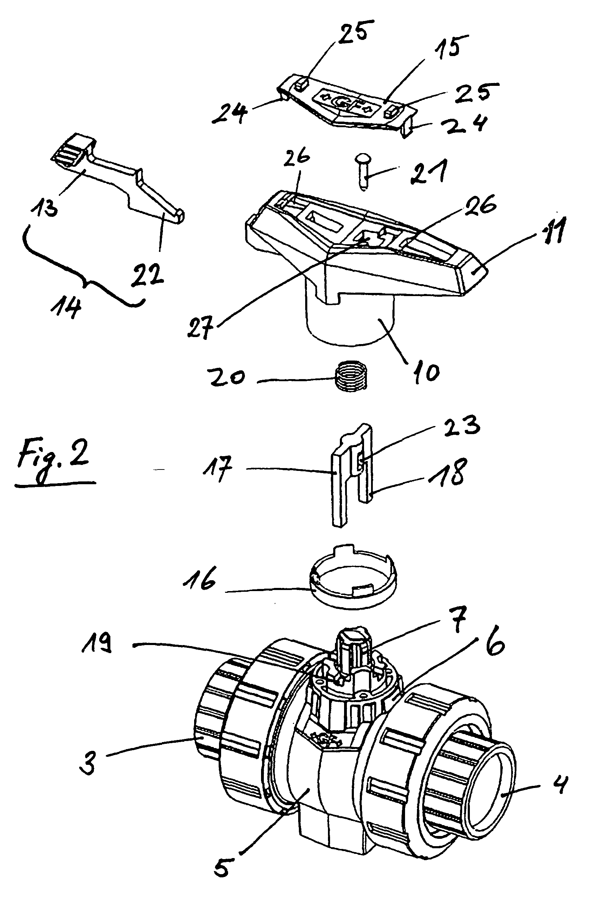

In Figur 2 ist der gleiche Kugelhahn 1 wie in Figur 1 in Explosionsdarstellung dargestellt. Gleiche Bezugszeichen beziehen sich auf die gleichen Elemente des Kugelhahns 1. In Figur 2 sind alle Einzelteile des Handgriffes 2 ersichtlich. Zwischen dem Kragenbereich 6 des Kugelhahnes 1 und dem Befestigungskopf 10 des Handgriffs 2 ist ein Führungsring 16 angeordnet. Der Führungsring 16 dient als Schutz vor Schmutzeintritt zum Innern des Kugelhahns 1. Im Befestigungskopf 10 ist ein Klinkenteil 17 mit zwei Rastfingern 18 angeordnet. Die Rastfinger 18 greifen in dazupassenden Aussparungen 19 im Kragenbereich 6 des Ventilgehäuses 5 ein.

Das Klinkenteil 17 wird durch die Federkraft einer Feder 20, die ebenfalls im Befestigungskopf 10 zwischen dem Klinkenteil 17 und dem Betätigungsarm 11 angeordnet ist, nach unten in die Aussparungen 19 gedrückt, wenn der Handgriff 2 sich in der gewünschten Position gebracht wird, in der die Betätigung des Ventils 1 verhindert werden soll. Durch die Tiefe und die Platzierung der Aussparungen 19 im Kragenbereich 6 wird die Ventilstellung oder werden die Ventilstellungen gewählt, die zur Feststellung des Ventils gewünscht werden. Der Befestigungskopf 10 wird mittels des Befestigungsmittels 21 an die Spindel 7 befestigt. In Figur 2 ist das Befestigungsmittel eine Spezialschraube 21, die einfach fest geschraubt werden kann, jedoch nur mit Spezialwerkzeug wieder los geschraubt werden kann.

Der vordere Teilbereich 22 des Hebelarms 13, der hier als Druckknopf ausgebildet ist, greift in einen Durchbruch 23 des Klinkenteils 17 ein. Durch die Bewegung des Hebelarms 13 in Bezug auf dem Handgriff 2 kann das Klinkenteil 17 entgegen der Federkraft der Feder 20 angehoben werden und in dieser Stellung kann der Handgriff 2 betätigt werden. Der Hebelarm 13 kann in bekannter Art und Weise, beispielsweise mit einem Vorhängeschloss gegen der Hebelbewegung verschlossen werden. Der vordere Teilbereich 22 des Druckknopfes 13 kann in der Längsrichtung des Handgriffes 2 so weit verlängert werden, dass bei eingerastetem Druckknopf 13 die Spezialschraube 21 vom vorderen Teilbereich 22 bedeckt wird. Die Spezialschraube 21 kann somit von oben, das heisst in der Richtung der Spindel 7 gesehen, nicht mehr betätigt werden. Hiermit wird eine weitere Sicherung gegen unbeabsichtigter Betätigung des Ventils1 erreicht.

Die Verschlussplatte 15 weist auf der Unterseite ein erstes Paar von Vorsprüngen 24 und auf der Oberseite ein zweites Paar weitere Vorsprünge 25 auf. Die Oberseite des Handgriffs 2 weist Vertiefungen 26 auf, in die die erste Vorsprünge 24 beim Zusammenbau des Ventils 1 eingreifen. Unter der Verschlussplatte 15 befindet sich im Handgriff auch einen Durchbruch 27, durch den die Spezialschraube 21 eingebracht und befestigt werden kann. Die Verschlussplatte 15 und die übrigen Teile des Kugelhahns 1 sind soweit möglich aus Kunststoffmaterial ausgebildet.

Einzig die Verschlussplatte 15 ist aus einem Kunststoffmaterial hergestellt, das eine wesentlich höhere Festigkeit hat als das übrige Kunststoffmaterial. Hierdurch wird erreicht, dass die Verschlussplatte 15 besonders gut in die Vertiefungen 26 festgehalten wird. Ausserdem wird dadurch erreicht, dass die Verschlussplatte 15 mit den Vorsprüngen 25 zur Montage und Demontage des Kugelkükens im Ventilgehäuse 5 verwendet werden kann. Das Kugelküken wird in bekannter Art und Weise von Einschraubringen in dem Ventilgehäuse 5 am Platz gehalten. Die Einschraubringe weisen hierzu radial angeordnete Vertiefungen auf, die in Form und Platzierung mit der Form und der Platzierung der Vorsprünge 25 übereinstimmen. Die Verschlussplatte 15 ist beispielsweise aus einer glasfaserverstärkten Polypropylenformmasse (PP-GFK) und das Ventil 1 selbst ist aus Polypropylenformmasse (PP) hergestellt.

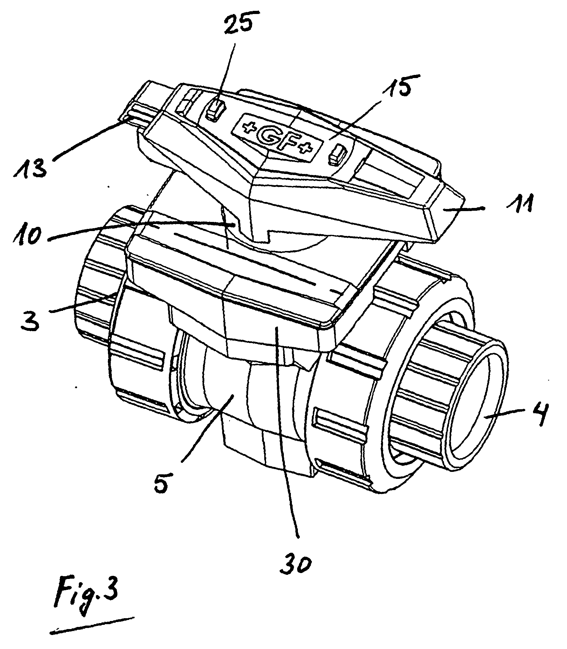

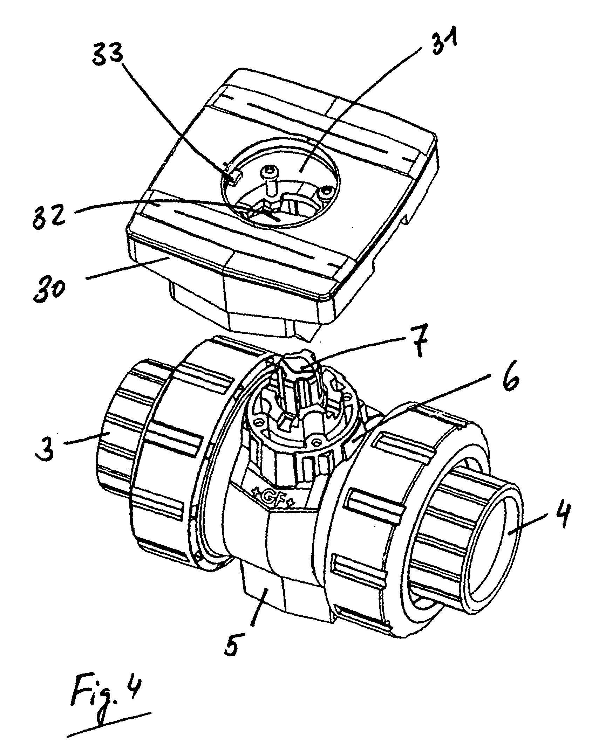

In Figuren 3 und 4 ist ein zweites Ausführungsbeispiel eines Kugelhahnes 1 mit dem gleichen Handgriff 2 wie in Figuren 1 und 2 dargestellt. Der Handgriff 2 mit dem Befestigungskopf 10, dem Betätigungsarm 11, der Hebelarm 13, der Verschlussplatte 15 ist identisch mit dem Handgriff aus den Figuren 1 und 2. Im Kragenbereich 6 des Kugelhahns 1 ist ein sogenanntes Multifunktionsgehäuse 30 abgebildet. Das Multifunktionsgehäuse 30 wird, wie in Figur 4 ersichtlich, genau passend über den Kragenbereich 6 angeordnet. Das Multifunktionsgehäuse 30 weist auf der oberen Seite eine Öffnung 31 auf, in die der Betätigungskopf 10 des Handgriffs 2 eingesetzt werden kann. Auf der unteren Seite des Multifunktionsgehäuses 30 ist eine weitere Öffnung 32 ersichtlich, die genau zum Kragenbereich 6 des Ventils 2 passt.

Im Multifunktionsgehäuse 30 ist einen Mitnehmernocken 33 ersichtlich. Dieser Nocken 33 ist am Innenumfang eines Mitnehmerringes ausgebildet. Der Nocken 33 des Mitnehmerringes passt in eine Vertiefung am Aussenumfang des Betätigungskopfes 10 und wird bei der Drehbewegung des Handgriffes 2 mitgenommen. Der Mitnehmerring weist weitere hier nicht sichtbare Nocken auf, die Mikroschaltern betätigen oder andere Signalgeber ansteuern. Durch den Einbau des Multifunktionsgehäuses 30 wird erreicht, dass auch bei einem manuell bedienten Ventil die Ventilstellung elektrisch oder elektronisch erfassbar gemacht werden kann.

Der hier vorgeschlagene Handgriff 2 als Betätigungsorgan für den Kugelhahn 1 Ist in jeder gewünschten Ventilstellung verriegelbar, kann mit einer Schliessvorrichtung, wie beispielsweise ein Vorhängeschloss, abgeschlossen werden, weist am Betätigungskopf 10 mindestens eine Vertiefung für den Mitnehmerring zur Erfassung der Ventilstellung auf, kann mit einer Spezialschraube 21 an die Spindel 7 des Ventils 1 angeschraubt werden und umfasst eine Verschlussplatte 15, die sowohl zum Verschliessen der Spezialschraube 7 als auch zur Montage und Demontage des Kugelhahnes 1 verwendet werden kann. Dank den Vorsprüngen 25 kann die Verschlussplatte 15 auch zur Montage und Demontage eines Einschraubringes im Innern des Kugelhahnes verwendet werden. Das Drehmoment der verschiedenen Elementen des Kugelhahnes 1 kann mit der Verschlussplatte 15 eingestellt werden.

## Patentansprüche

1. Handgriff (2) als Betätigungsvorrichtung für Ventile (1), umfassend einen Befestigungskopf (10) zur Befestigung an einer Spindel (7) des Ventils und einen Betätigungsarm (11) zur drehbaren Betätigung der Spindel, wobei die Spindel (7) in einem Ventilgehäuse (5) drehbar um die Drehachse eines Verschlussteiles angeordnet ist, wobei der Betätigungsarm (11) senkrecht zur Achse der Spindel (7) von einer geschlossenen Stellung in einer geöffneten Stellung des Ventils (1) bewegbar angeordnet ist, wobei der Betätigungsarm (11) ein Mittel (14) zur Verhinderung der Betätigung des Handgriffs (2) aufweist, wobei der Befestigungskopf (10) ein Befestigungsmittel (21) zur Befestigung des Handgriffes (2) an der Ventilspindel (7) aufweist, und wobei der Handgriff eine Verschlussplatte (15) zum Verschliessen des Befestigungsmittels (21) aufweist, **dadurch gekennzeichnet, dass** im Befestigungskopf (10) ein Klinkenteil (17) mit zwei Rastfingern (18) angeordnet ist, derart dass die Rastfinger (18) des Klinkenteils (17) in dazupassenden Aussparungen (19) eines Kragenbereichs (6) des Ventilgehäuses (5) eingreifbar ausgebildet sind, wobei das Klinkenteil (17) vom Mittel (14) zur Verhinderung der Betätigung entgegen der Kraft einer Feder (20) aus den Aussparungen (19) angehoben werden kann, dass das Befestigungsmittel (21) als eine Spezialschraube ausgebildet ist, und dass zwischen dem Kragenbereich (6) des Ventilgehäuses (5) und dem Befestigungskopf (10) des Handgriffs (2) ein Führungsring (16) angeordnet ist.

2. Handgriff nach dem Anspruch 1, **dadurch gekennzeichnet, dass** die Verschlussplatte (15) aus einem ersten Kunststoffmaterial ausgebildet ist.

3. Handgriff nach mindestens einem der Ansprüche 1 oder 2, **dadurch gekennzeichnet, dass** das Ventil (1) aus einem weiteren Kunststoffmaterial ausgebildet ist.

4. Handgriff nach mindestens einem der Ansprüche 1 bis 3, **dadurch gekennzeichnet, dass** das Ventil als Kugelhahn (1) ausgebildet ist.

5. Handgriff nach mindestens einem der Ansprüche 1 bis 4, **dadurch gekennzeichnet, dass** die Verschlussplatte (15) aus einem Kunststoffmaterial mit einer wesentlich höheren Festigkeit als die Festigkeit des Kunststoffmaterials des Ventils (1) ausgebildet ist.

6. Handgriff nach mindestens einem der Ansprüche 1 bis 5, **dadurch gekennzeichnet, dass** die Verschlussplatte (15) ein erstes Paar von Rastvorsprüngen (24) zur Verrastung in den Handgriff (2) aufweist.

7. Handgriff nach mindestens einem der Ansprüche 1 bis 6, **dadurch gekennzeichnet, dass** die Verschlussplatte (15) ein zweites Paar von Vorsprüngen (25) aufweist, die passend zur Montage und Demontage des Kugelhahns (1) ausgebildet sind.

## Claims

1. Handle (2) as actuating device for valves (1), comprising an actuating head (10) for fastening to a spindle (7) of the valve and an actuating arm (11) for the rotatable actuation of the spindle, the spindle (7) being arranged in a valve housing (5) in such a way as to be rotatable about the rotation axis of a sealing part, the actuating arm (11) being arranged perpendicularly to the axis of the spindle (7) in such a way as to be movable from a closed position into an open position of the valve (1), the actuating arm (11) having a means (14) for preventing the actuation of the handle (2), the fastening head (10) having a fastening means (21) for fastening the handle (2) to the valve spindle (7), and the handle having a sealing plate (15) for sealing the fastening means (21), **characterized in that** a latch part (17) having two catch fingers (18) is arranged in the fastening head (10) in such a way that the catch fingers (18) of the latch part (17) are designed to be engageable in matching recessed portions (19) of a collar region (6) of the valve housing (5), it being possible for the latch part (17) to be lifted from the recessed portions (19) against the force of a spring (20) by the means (14) for preventing the actuation, **in that** the fastening means (21) is designed as a special screw, and **in that** a guide ring (16) is arranged between the collar region (6) of the valve housing (5) and the actuating head (10) of the handle (2).

2. Handle according to Claim 1, **characterized in that** the sealing plate (15) is formed from a first plastic material.

3. Handle according to at least one of Claims 1 and 2, **characterized in that** the valve (1) is formed from a further plastic material.

4. Handle according to at least one of Claims 1 to 3, **characterized in that** the valve is designed as a ball valve (1).

5. Handle according to at least one of Claims 1 to 4, **characterized in that** the sealing plate (15) is formed from a plastic material having substantially higher strength than the strength of the plastic material of the valve (1).

6. Handle according to at least one of Claims 1 to 5, **characterized in that** the sealing plate (15) has a first pair of catch projections (24) for catching in the handle (2).

7. Handle according to at least one of Claims 1 to 6, **characterized in that** the sealing plate (15) has a pair of projections (25) which are suitably designed for fitting and removing the ball valve (1).

## Revendications

1. Poignée (2) servant de dispositif d'actionnement pour soupapes (1), comprenant une tête de fixation (10) pour la fixation à une tige (7) de la soupape et un bras d'actionnement (11) pour l'actionnement en rotation de la tige, la tige (7) étant disposée dans un boîtier de soupape (5) à rotation autour de l'axe de rotation d'une partie de fermeture, le bras d'actionnement (11) étant disposé perpendiculairement à l'axe de la tige (7) de manière à pouvoir être déplacé d'une position fermée dans une position ouverte de la soupape (1), le bras d'actionnement (11) présentant un moyen (14) pour empêcher l'actionnement de la poignée (2), la tête de fixation (10) présentant un moyen de fixation (21) pour la fixation de la poignée (2) à la tige de soupape (7) et la poignée présentant une plaque de fermeture (15) pour la fermeture du moyen de fixation (21), **caractérisée en ce que** dans la tête de fixation (10) est disposée une partie de cliquet (17) avec deux doigts d'encliquetage (18), de telle sorte que les doigts d'encliquetage (18) de la partie de cliquet (17) soient réalisés de manière à venir en prise dans des évidements adaptés (19) d'une région de col (6) du boîtier de la soupape (5), la partie de cliquet (17) pouvant être soulevée des évidements (19) par un moyen (14) pour empêcher l'actionnement, à l'encontre de la force d'un ressort (20), **en ce que** le moyen de fixation (21) est réalisé sous forme de vis spéciale et **en ce qu'**entre la région de col (6) du boîtier de soupape (5) et la tête de fixation (10) de la poignée (2) est disposée une bague de guidage (16).

2. Poignée selon la revendication 1, **caractérisée en ce que** la plaque de fermeture (15) est réalisée en un premier matériau en plastique.

3. Poignée selon au moins l'une des revendications 1 ou 2, **caractérisée en ce que** la soupape (1) est réalisée en un autre matériau en plastique.

4. Poignée selon au moins l'une des revendications 1 à 3, **caractérisée en ce que** la soupape est réalisée sous forme de robinet à boisseau sphérique 1.

5. Poignée selon au moins l'une des revendications 1 à 4, **caractérisée en ce que** la plaque de fermeture (15) se compose d'un matériau en plastique ayant une solidité nettement supérieure à celle du matériau en plastique de la soupape (1).

6. Poignée selon au moins l'une des revendications 1 à 5, **caractérisée en ce que** la plaque de fermeture (15) présente une première paire de saillies (24) pour l'encliquetage dans la poignée (2).

7. Poignée selon au moins l'une des revendications 1 à 6, **caractérisée en ce que** la plaque de fermeture (15) présente une deuxième paire de saillies (25) qui sont réalisées de manière adaptée au montage et au démontage du robinet à boisseau sphérique (1).
